**Europäisches Patentamt**

**European Patent Office**

**Office européen des brevets**

(19)

(11) Veröffentlichungsnummer: **0 174 453
B1**

(12)                    # EUROPÄISCHE PATENTSCHRIFT

(45) Veröffentlichungstag der Patentschrift:
**24.05.89**

(51) Int. Cl.⁴: **F 16 D 3/78**

(21) Anmeldenummer: **85108282.6**

(22) Anmeldetag: **04.07.85**

(54) **Elastische Wellenkupplung.**

(30) Priorität: **10.08.84 DE 3429519**

(43) Veröffentlichungstag der Anmeldung:
**19.03.86 Patentblatt 86/12**

(45) Bekanntmachung des Hinweises auf die Patenterteilung:
**24.05.89 Patentblatt 89/21**

(84) Benannte Vertragsstaaten:
**DE FR GB IT**

(56) Entgegenhaltungen:
**DE-B- 1 266 578
FR-A- 1 410 904
FR-A- 2 102 496**

(73) Patentinhaber: **GOETZE AG,
Bürgermeister-Schmidt-Strasse 17,
D-5093 Burscheid 1 (DE)**

(72) Erfinder: **Johnen, Rolf, Fröbelstrasse 1a,
D-5060 Bergisch-Gladbach (DE)**
Erfinder: **Kirch, Hans, Pastor-Löh-Strasse 85,
D-5093 Burscheid (DE)**
Erfinder: **Otto, Volkmar, Dipl. -Ing., Quettinger
Strasse 150, D-5090 Leverkusen 3 (DE)**

## Beschreibung

Die Erfindung betrifft eine elastische Wellenkupplung zur Verbindung der Endbereiche zweier Maschinenteile, insbesondere zum Verbinden einer Kraftfahrzeug-Getriebewelle mit einer Gelenkwelle, bestehend aus einem üblicherweise polygonalen Gummiring mit darin einvulkanisierten, miteinander verbundenen als auch unverbundenen Verbindungs- und Befestigungselementen, wobei die miteinander verbundenen Verbindungs- und Befestigungselemente durch einen Nabenstern gebildet sind, der zumindest im radial äusseren Bereich seiner Arme mit einem Wellenende und die nicht miteinander verbundenen Verbindungs- und Beestigungselemente mit dem freien Ende der anderen Welle verbindbar sind.

Durch das deutsche Gebrauchsmuster 7 932 960 ist bereits eine elastische Wellenkupplung bekannt, die zur Verbindung zweier Wellenenden dient. Sie besteht aus einem polygonalen Gummiring mit an den Enden zur wechselseitigen Befestigung der Wellenenden anvulkanisierten Spannhülsen, wobei jede zweite Spannhülse durch den Arm eines Nabensternes gebildet ist. Der Nabenstern besitzt eine zentrale Bohrung zur austauschbaren Aufnahme einer Zentrierhülse, zur Zentrierung des Wellenzapfens eine Antriebswelle.

Ferner ist durch die DE-AS 2 615 923 eine elastische Wellenkupplung bekannt. Die zwischen den Armen eines Nabensternes liegenden Metallteile sind Arme eines einzelnen Sektorteiles. Die einzelnen Sektorteile sind mittels einer Vorrichtung unter Vorspannung der Gummisäulen aneinander fügbar und durch Schweissen, Kleben oder dergleichen, einen kompletten Wellenstern bildend, miteinander fest verbunden.

Üblicherweise werden die vorab angesprochenen Wellenkupplungen nabensternseitig mit einem Schiebestück mit Keilwellenprofil versehen. Durch diese Massnahme ist zwar eine Steckverbindung zwischen der Kupplung und dem einen Wellenende möglich, der axiale Bauraum ist dadurch jedoch erhöht. Ferner ist es nicht möglich, die Kupplung und das eine Wellenende gleichzeitig auszuwuchten.

Der Erfindung liegt daher die Aufgabe zugrunde, neben der Reduzierung des Bauraumes und des Gewichtes eine Möglichkeit zu schaffen, eine gattungsgemässe Wellenkupplung mit einem Wellenende zusammen auswuchten zu können.

Diese Aufgabe wird erfindungsgemäss dadurch gelöst, dass der Nabenstern zur Verbindung mit der nicht zu wuchtenden Kraftfahrzeug-Getriebewelle mit einer einstückig mit dem Nabenstern ausgebildeten, als axial verlaufenden Ansatz gearbeiteten Zentrierung versehen ist.

Die Wellenkupplung, die üblicherweise mit einem Spannband versehen ist, wird zunächst einmal mit ihren im entspannten Zustand nicht auf einem Teilkreisdurchmesser angeordneten, zwischen den Armen des Nabensternes liegenden Verbindungs- beziehungsweise Befestigungselementen mit dem einen Wellenende verbunden, dadurch kann das Spannband bereits vor dem Auswuchtvorgang entfernt werden.

Durch die einstückig mit dem Nabenstern ausgebildete, als axial verlaufenden Ansatz gearbeitete Zentrierung ist kein radiales Spiel zwischen Kupplung und Antriebswelle der Auswuchtmaschine beziehungsweise der Kraftfahrzeug-Getriebewelle möglich. Es wird eine exakt zentrische Verbindung geschaffen, die beliebig oft montier- und demontierbar ist.

Bisher wurden beide Teile für sich ausgewuchtet und anschliessend miteinander verbunden. Bedingt durch Herstellungstoleranzen, kam es des öfteren vor, dass die Lebensdauer erheblich reduziert wurde.

Vorzugsweise ist es vorteilhaft, dass der Ansatz umlaufend ausgebildet ist.

Die Erfindung ist in der Zeichnung dargestellt und wird im folgenden näher beschrieben. Es zeigen:

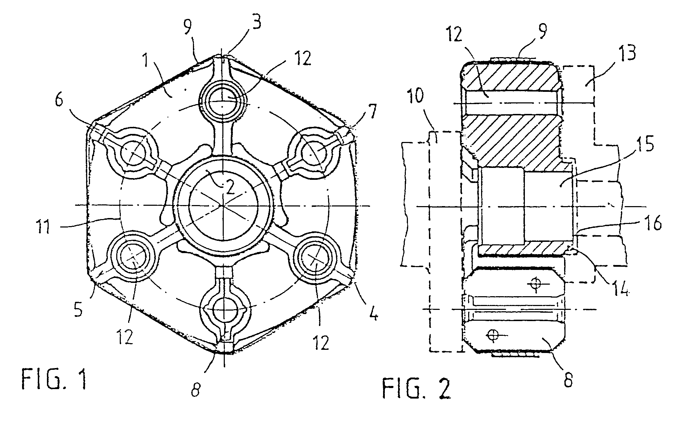

Figuren 1 und 2 elastische Wellenkupplung mit Nabenstern und zwischen den Armen des Nabensternes angeordneten hülsenförmigen Verbindungselementen.

Die Figuren 1 und 2 zeigen eine elastische Wellenkupplung, die aus folgenden Teilen besteht: einem polygonalen Gummiring 1, einem dreiarmigen Nabenstern 2 sowie zwischen den Armen 3 bis 5 angeordneten, aus zwei Teilen bestehenden hülsenförmigen Verbindungselementen 6 bis 8 sowie einem Spannband 9. Um die Kupplung mit zum Beispiel einer Gelenkwelle 10 (gestrichelt dargestellt) zusammen auswuchten zu können, werden die im entspannten Zustand der Kupplung nicht auf einem Teilkreisdurchmesser 11 liegenden Hülsen 6 bis 8 zunächst einmal mit dem Wellenende 10 verbunden. In diesem Zustand werden beide Teile ausgewuchtet, nachdem das Spannband 9 entfernt worden ist. Die auf einem beziehungsweise in diesem Zustand gleichen Teilkreisdurchmesser 11 liegenden Durchgangslöcher 12 in den Armen 3 bis 5 des Nabensternes 2 verändern den Wuchtzustand im Anschluss an die Montage mit dem ebenfalls nur gestrichelt dargestellten Getriebewellenende 13 nicht mehr. Zur Zentrierung des nabensternseitigen Endes der Kupplung gegenüber dem Wellenende 13 ist ein umlaufender Axilansatz 14 im Bereich der Nabensternbohrung 15 angeformt, der in eine korrespondierende Nut 16 des Getriebewellenendes 13 eingreift.

## Patentansprüche

1. Elastische Wellenkupplung zur Verbindung der Endbereiche zweier Maschinenteile, insbesondere zum Verbinden einer Kraftfahrzeug-Getriebewelle (13) mit einer Gelenkwelle (10), bestehend aus einem üblicherweise polygonalen Gummiring (1) mit darin einvulkanisierten, miteinander verbundenen als auch unverbundenen Verbindungs- und Befestigungselementen, wobei die miteinander verbundenen Verbindungs- und Befestigungselemente (12) durch einen Nabenstern (2) gebildet sind, der zumindest im radial äusseren Bereich seiner Arme (3, 4, 5) mit einem Wellenende und die nicht miteinander verbundenen Verbindungs- und Befestigungselemente (6, 7, 8) mit dem freien Ende der anderen Welle verbindbar sind, dadurch gekennzeichnet, dass der Nabenstern (2) zur Verbindung mit der nicht zu wuchtenden Kraftfahrzeug-Getriebewelle (13) mit einer einstückig mit dem Nabenstern (2) ausgebildeten, als axial verlaufenden Ansatz gearbeiteten Zentrierung (14) versehen ist.

2. Elastische Wellenkupplung nach dem Anspruch 1, dadurch gekennzeichnet, dass der Ansatz umlaufend ausgebildet ist.

## Claims

1. Flexible shaft coupling for connecting the end zones of two machine parts, in particular for connecting a motor vehicle transmission shaft (13) with a universal-joint or propeller shaft (10), consisting of a usually polygonal rubber ring (1) with connecting and fixing elements connected and also not connected to one another vulcanised therein, the connecting and fixing elements connected to one another (12) being formed by a hub spider (2) which can be connected to one shaft end at least in the radially outer zone of its arms (3, 4, 5), and the connecting and fixing elements not connected to one another (6, 7, 8) being connectable to the free end of the other shaft, characterised in that for connection with the motor vehicle transmission shaft (13), which is not to be balanced, the hub spider (2) is provided with a centring means (14) formed in one piece with it and worked as an axially extending shoulder.

2. Flexible shaft coupling according to claim 1, characterised in that the shoulder is of circular form.

## Revendications

1. Accouplement élastique entre deux arbres servant à lier les extrémités de deux parties de machine, en particulier un arbre d'entraînement (13) de véhicule et un arbre de transmission (10), comprenant une bague (1) en caoutchouc généralement polygonale dans laquelle sont vulcanisées des éléments de liaison et de fixation liés les uns aux autres, pour certains, et libres les uns par rapport aux autres, pour d'autres, les éléments (12) de liaison et de fixation liés les uns aux autres faisant partie d'un moyeu (2) en forme d'étoile, qui peut être assujetti à un bout d'arbre au moins dans la zone extérieurement radiale de ses branches (3, 4, 5) et les éléments de liaison et de fixation (6, 7, 8) libres les uns par rapport aux autres pouvant être assujettis à une extrémité libre de l'autre arbre, caractérisé en ce que le moyeu (2) en forme d'étoile est muni d'une pièce de centrage (14) solidaire du moyeu (2), usinée en épaulement faisant saillie axialement et servant à équilibrer l'arbre d'entraînement (13) du véhicule.

2. Accouplement élastique selon la revendication 1, caractérisé en ce que l'épaulement entoure le trou axial (15) du moyeu (2).

FIG. 1

FIG. 2